# EUROPEAN PATENT SPECIFICATION

(11) **EP 4 557 701 B1**
(45) Date of publication and mention of the grant of the patent: **13.05.2026**
(21) Application number: 24157906.9
(22) Date of filing: 15.02.2024
(51) Int. Cl.: H04L 67/00, G06F 8/60, G06F 9/445, G06F 9/50, G06F 8/65, G06F 15/173, H04L 67/1097

(54) **COMMUNICATION NETWORK, METHOD AND DEVICE FOR OPERATING WITH A DISTRIBUTED MEMORY SPACE**
KOMMUNIKATIONSNETZWERK, VERFAHREN UND VORRICHTUNG ZUM BETRIEB MIT EINEM VERTEILTEN SPEICHERRAUM
RÉSEAU DE COMMUNICATION, PROCÉDÉ ET DISPOSITIF POUR LE FONCTIONNEMENT AVEC UN ESPACE MÉMOIRE DISTRIBUÉ

(30) Priority: 17.11.2023 RO 202300705
(43) Date of publication of application: 21.05.2025
(73) Proprietor: NXP USA, Inc., Austin TX 78735 (US)
(72) Inventor: Nica, Elvis Gabriel, 5656AG Eindhoven (NL); Viscotel, Laura-Anca, 5656AG Eindhoven (NL)
(74) Representative: Hardingham, Christopher Mark

(56) References cited:
- US-A1- 2018 165 196
- WEN-YEW LIANG ET AL: "Design of a dynamic distributed mobile computing environment", PARALLEL AND DISTRIBUTED SYSTEMS, 2007 INTERNATIONAL CONFERENCE ON, IEEE, PISCATAWAY, NJ, USA, 5 December 2007 (2007-12-05), pages 1 - 8, XP031573059, ISBN: 978-1-4244-1889-3

## Description

### Field of the invention

The field of the invention relates to a communication network, a method and devices for operating a distributed memory space (DMS), where neither the communication network nor the devices use an operating system. Examples described herein are applicable to, but not limited to, a method, devices and a communication network for creating and operating with a DMS, for example where the communication network is an Internet of Things (IoT) communication network.

### Background

The Internet of Things (IoT) is a communication network of interrelated loT devices that connect and exchange data with other loT devices and the cloud. IoT devices are typically embedded with technology, such as sensors and software and can include mechanical and digital machines and consumer objects. Increasingly, organizations in a variety of industries are using an loT to operate more efficiently, deliver enhanced customer service, improve decision-making and increase the value of their business. With the loT, data is transferable over a network without requiring human-to-human or human-to-computer interactions. An entity, node or device or a 'thing' in an loT network can take many forms, including a person with a heart monitor implant, a farm animal with a biochip transponder, an automobile that has built-in sensors to alert the driver when tyre pressure is low, etc., or indeed any other natural or man-made object that can be assigned an Internet Protocol (IP) address and is able to transfer data over a network. Thus, typically, an loT network consists of web-enabled smart devices that use embedded systems, such as processors, sensors, memory and communication hardware, to collect, send and act on data they acquire from their environments.

An embedded device is a highly specialized device that is designed for one or very few specific purposes and is usually embedded or included within another object or as part of a larger system. Embedded devices and systems have extensive applications in commercial, consumer, industrial, automotive, health-care and many other industries because of their diminutive and inconspicuous nature. Generally, whatever operating system or firmware an embedded device has can only run one specific application or purpose in order to perform its function, and this is because the device is meant to be small. Hence, the embedded device should consume small amounts of power and also has little computing power and has limited storage. Hereinafter, the term 'device' is intended to encompass all such forms of communication entity including said embedded devices.

One identified issue in an IoT network, as in other similar known communication networks, relates to the known Over-The-Air (OTA) software system update process. Usually, the OTA software system update process uses a large amount of the flash memory of a device, not least as new data or software needs to be uploaded and stored whilst the existing data or software is functional and in situ. Often, in some applications, the flash memory is not large enough for a specific image update, and in this instance another (additional, external) storing device is used and physically connected to the loT device to assist in the update process. In order to avoid this convoluted situation, and in order to execute the OTA software system update process on a single device, it may alternatively be equipped with a larger external flash, which may be quite slow and expensive. However, if the OTA system software update transfer of a new system file encounters an error or the update process is interrupted, the update progress is lost, and the OTA software system update transfer must be re-started. Moreover, if the same image is needed by multiple devices in the network, the OTA software system update transfer is performed repeatedly for each loT device.

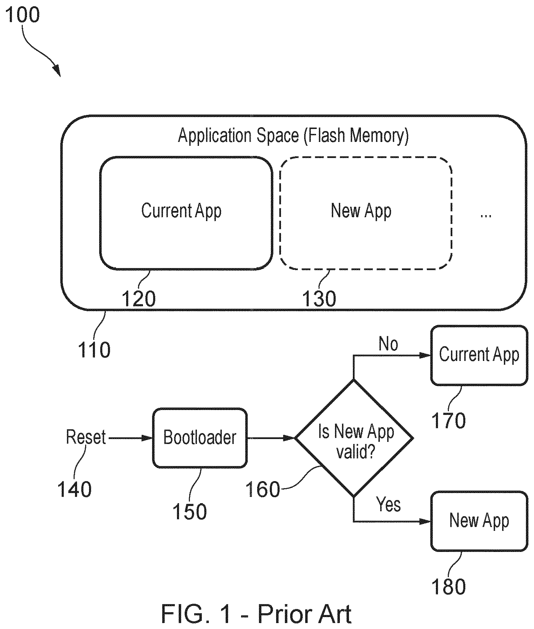

FIG. 1 illustrates one simple example flowchart 100 of a known process that highlights the two main memory areas that are needed for an over-the-air (OTA) software/firmware system update process for updating devices in an IoT network. The example flowchart 100 of an over-the-air (OTA) software/firmware system update process for updating devices in an loT network commences with a device that is reset at 140, followed by a bootloader process at 150 that initiates the software processes within the device. Thus, when a device receives an OTA software/firmware system update, it first stores a new system update data file, say in a specially designated memory area, then it triggers the bootloader that is responsible for transferring control to the new system data file. A determination is then made at 160 as to whether or not the new system update is valid. If at 160 the new system update is not valid, e.g., an error has occurred during the OTA software/firmware system update download process, the bootloader transfers control to the existing system data file instead of the new system data file, so that the device remains functional. However, if at 160 the new system data file is valid, then the new system update is downloaded and used by the device at 180. Consequently, two main memory areas are needed for an integral OTA update, namely: the new system data file storage area 130 and the existing system data file 120 comprising firmware currently running on the loT device 110 that includes an application space of flash memory.

It is known that shared and/or distributed memory systems predominantly refers to advanced operating system (OS) and file systems and multicore architectures. A document located at: https://ieeexplore.ieee.org/document/1524243 describes a shared code storage mechanism and is titled: 'Constructing a Memory-Based Distributed Code Storage on Networked Diskless Embedded Systems'.

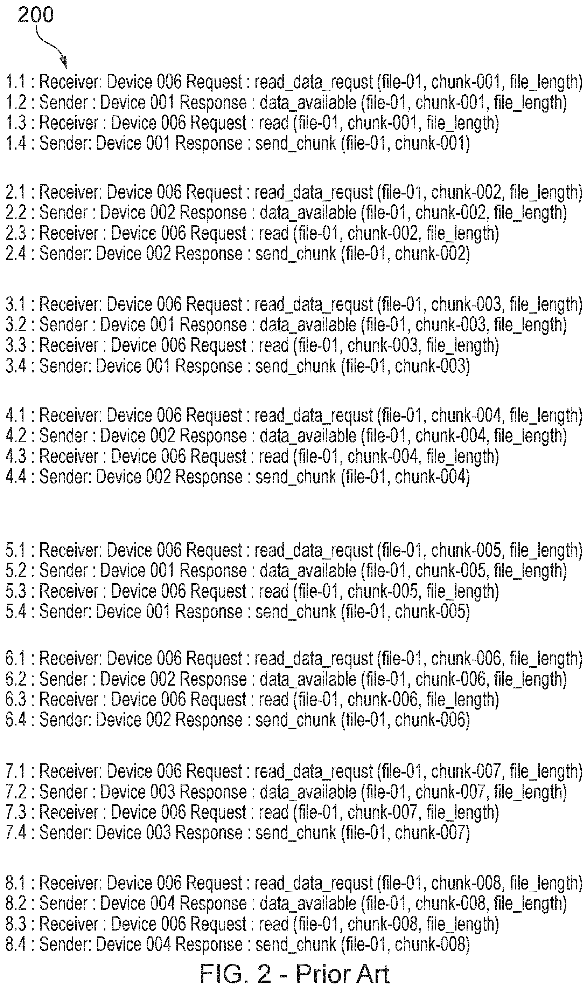

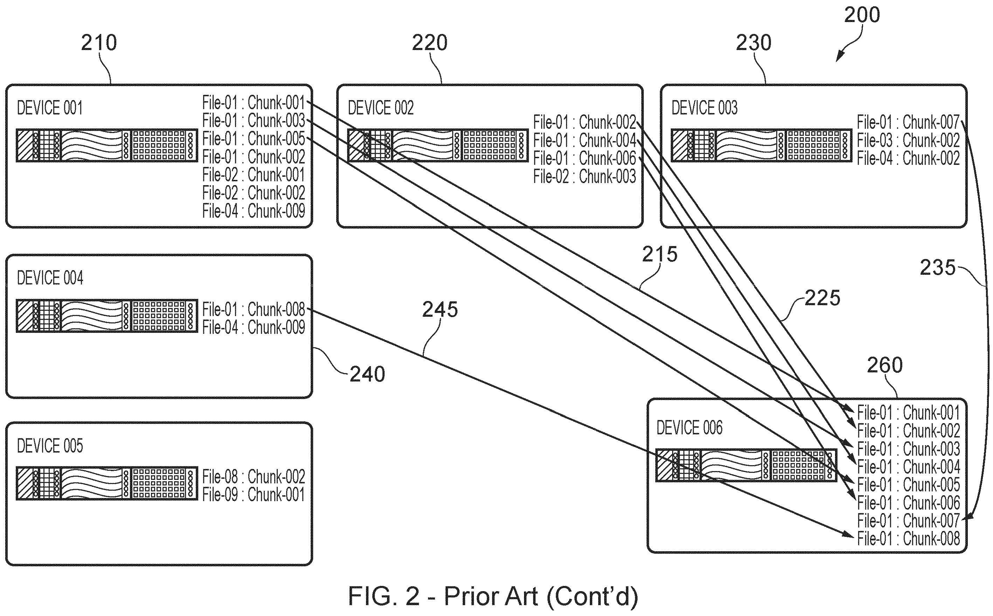

FIG. 2 illustrates an example of a multitude of messages 200 between a known multitude of IoT devices in an loT network, where multiple requests for, and transmissions of, OTA system software/firmware updates are made. However, it is known that IoT devices that generally do not run operating systems (typically referred to as non-OS devices), usually have scarce storage size and limited resources. Hence, there is a need, as shown in FIG. 2, for each loT device to request and receive respective OTA system software/firmware updates, which is an inefficient and resource-hungry approach. Here, messages 215, 225, 235, 245, between a number of sending devices (sending device-1 210, sending device-2 220, sending device-3 230, sending device-4 240, ... in this example) and a receiving device 260 in a network are shown.

United States patent application, publication number US20218/165196A1 discloses a processor including a cache a caching agent and a processing node to decode an instruction including at least one operand specifying an address range within a distributed shared memory (DSM) and perform a flush to a first of a plurality of memory devices in the DSM at the specified address range.

Accordingly, there is a need for an improved method for memory management in a non-OS based communication network and non-operating system (non-OS) embedded devices in said communication network, such as found inside an loT network.

### Summary

The invention is defined by the independent claims. Various optional features are further defined and described in dependent claims.

Examples herein described provide a method for memory management in a communication network and a non-OS embedded device, such as an IoT device, as described in the accompanying claims. Specific example embodiments are set forth in the dependent claims. These and other aspects will be apparent from and elucidated with reference to the embodiments described hereinafter.

### Brief description of the drawings

Further details, aspects and example embodiments will be described, by way of example only, with reference to the drawings. In the drawings, like reference numbers are used to identify like or functionally similar elements. Elements in the figures are illustrated for simplicity and clarity and have not necessarily been drawn to scale.
FIG. 1 illustrates one simple example flowchart of a known process that highlights the two main memory areas that are needed for an over-the-air (OTA) process for updating devices in an loT network.
FIG. 2 illustrates an example of a known multitude of IoT devices in an IoT network where multiple requests for, and transmissions of, OTA updates are made.
FIG. 3 illustrates one example of a non-OS embedded device's memory, with certain sections of its own flash memory, random access memory (RAM) and read only memory (ROM) re-allocated to store data for the whole network, according to examples herein described.
FIG. 4 illustrates one example of a sending non-OS embedded device communicating with a receiving non-OS embedded device, according to various examples herein described.
FIG. 5 illustrates one example of a flowchart of a non-OS embedded device performing write access, according to examples herein described.
FIG. 6 illustrates one example of a flowchart of a non-OS embedded device performing read operation, according to examples herein described.
FIG. 7 illustrates one example of a use by a non-OS embedded device of a chunk header that may also contain a chunk_delay value when a receiving embedded device requests files, according to some examples herein described.

### Detailed description

Devices inside a communication network that do not use an operating system, often referred to as non-OS devices or non-OS embedded devices, often have scarce storage size and limited memory resources. Examples herein described find applicability in networks that have devices with limited storage size and, thus, devices that would benefit from a larger storage space. An Internet of Things (IoT) network is one example of a wireless non-OS network. Examples herein described propose to improve the operation of such communication networks by extending the memory capability of non-OS embedded devices to use a distributed memory space (DMS), when the network is viewed as a whole. A plurality of non-OS embedded devices, or each non-OS embedded device, within the network is configured to have a certain memory section reserved for this purpose, which would be made available for the whole network to use. Thus, in this manner, a non-OS embedded device (possibly a device with limited storage capacity) needing some data just asks the network, for example by sending a broadcast or multicast message to the other devices in the network requesting the data. If one or more non-OS embedded devices in the network has the needed/requested data, the one or more non-OS embedded device(s) respond(s) indicating that it does/they do have the requested data and sends the data to the requesting non-OS embedded device.

Furthermore, when performing an OTA data file transfer to a device in the network, the data is divided into multiple data chunks and stored across the network, on different devices. Each data chunk is uniquely identified based on a file identifier (file_id) and chunk identifier (chunk_id). Thus, even if the target non-OS embedded device lacks sufficient memory space to hold the entire data file, the whole network may have enough. Consequently, the physically separated memories of all non-OS embedded devices inside the network are effectively and efficiently used as a common large memory storage space that any non-OS embedded device in the network is able to use.

Furthermore, examples herein described help to reduce the flash storage space needed for an over-the-air (OTA) update, for example for wireless devices in a wireless network, by keeping the new system update data file inside the DMS instead of keeping it in each of the device's flash memory. After validating the new system update data file, each non-OS embedded device is able to load it into its memory by overwriting an existing system data file. In some examples, it is envisaged that while receiving the chunks, the device can validate the image (for example by computing a cyclic redundancy check (CRC)) as the chunks arrive and it sends them on the DMS. Alternatively, in some examples if the new application is, say, a critical or important application, it is envisaged that the non-OS embedded device may be configured to validate the image again after the storage on the DMS has been completed, for example by reading the already stored data chunks. Furthermore, if the non-OS embedded device is running a critical or important application, the non-OS embedded device may be configured to be able to recover the existing system data file/software if something goes wrong with the read process of the new software system update from the DMS. In this manner, the non-OS embedded device may be configured to validate the image before loading it into its own memory. In order to be able to do this, before starting the read process of the new system update data file, it is envisaged that the non-OS embedded device may be configured to perform a back-up of the existing system data file inside the DMS, by performing a write operation.

Furthermore, if the same software/firmware system update is required by multiple devices, a different OTA transfer for each non-OS embedded device would no longer be needed. In contrast, each device's own bootloader may be configured to read and load the same new firmware image stored inside the DMS. In addition, if the old firmware is the same across multiple devices, each device may also be configured to access the same back-up copy, in case an issue or problem occurs during the OTA update.

Additionally, a further benefit provided by the concepts herein described may be to reduce the manufacturing costs of a single non-OS embedded device, such that they can be equipped with less flash memory or less ROM memory. Additionally, it is envisaged that OTA system update files may be temporarily or permanently stored at the network level and distributed to end devices concurrently, therefore saving transfer time and avoiding traffic congestion related problems.

Additionally, in a write operation, the file stored inside the network, e.g., a periodic update, may be further sent, chunk by chunk, to multiple non-OS embedded devices at the same time, in order to quickly replace or update the applications that boot on them, thereby reducing the overall time required for repetitive OTA transfers to just one transfer.

In a first aspect, a communication network for operating a distributed memory system (DMS) is described. The communication network comprises a plurality of non-operating system (non-OS) embedded devices having at least one memory wherein the at least one memory of the plurality of non-OS embedded devices is configured to have a first portion of memory reserved for the non-OS embedded device and a second portion of memory reserved and available for at least one other non-OS embedded devices from the plurality of non-OS embedded devices within the communication network to use. In this manner, examples of non-OS embedded devices are able to allocate data that they require in their own memory or have the data distributed across the plurality of non-OS embedded devices within the communication network.

In some examples, the communication network may configured as an Internet of Things, IoT, network. In this manner, one, some or all of the aforementioned problems with loT networks may be alleviated.

In a second aspect, a non-OS embedded device operational within a communication network with plurality of non-OS embedded devices, is described. The non-OS embedded comprises: a receiver configured to receive a new data chunk; a transmitter configured to transmit messages to the plurality of non-OS embedded devices; at least one memory; and a signal processor operably coupled to the receiver, the transmitter and the at least one memory, and configured to determine whether the at least one memory has capacity to store the received new data chunk; wherein the at least one memory is configured to comprise: a first portion of memory reserved for the non-OS embedded device where the at least one memory resides; and a second portion of memory reserved and available for at least one other non-OS embedded device from the plurality of non-OS embedded devices within the communication network to use. In some examples, the at least one memory comprises read only memory, ROM, a network shared ROM, a random access memory, RAM, a network shared RAM, at least one flash memory and at least one network shared flash.

In a third aspect, a method for operating a distributed memory system (DMS), by a communication network, is described. The method comprising: providing a plurality of non-OS embedded devices operational within the communication network with at least one memory; configuring the at least one memory of the plurality of non-OS embedded devices to comprise: a first portion of memory reserved for the non-OS embedded device where the at least one memory resides; and a second portion of memory reserved and available for at least one other non-OS embedded device from the plurality of non-OS embedded devices within the communication network to use.

Although examples are described with reference to an loT communication network, it is envisaged that in other examples, and communication network or embedded devices that have limited storage capacity, such as devices without an operating system, may benefit from the concepts herein described.

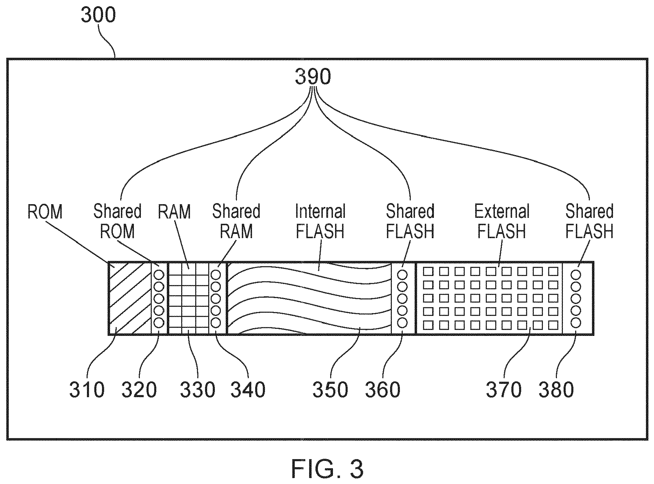

Referring now to FIG. 3, one example of a non-OS embedded device's distributed memory space, adapted such that certain sections of its own flash memory, random access memory (RAM) and read only memory (ROM) are re-allocated to store shared data for the whole network, is illustrated according to examples herein described. In this example, it is envisaged that a plurality of (and in some instances all) non-OS embedded devices may be required to, temporarily or permanently, dedicate sections of its own flash, RAM and ROM memory to store data for the whole communication network. Hereafter, the totality of the shared flash, RAM and ROM memory sections is referred to as the Shared Storage Space (SSS) 390 of a device 300, such as an loT device, as shown in FIG. 3. Here, the memory space of the loT device 300 is shown as comprising ROM 310, newly formed shared ROM 320, RAM 330, newly formed shared RAM 340, Internal flash 350, newly formed shared flash 360 and external flash 370 and newly formed shared external flash 380.

An IoT device 300 requires a certain amount of flash memory, and it is not able to store an incoming OTA file that exceeds its own flash size. Thus, examples herein described propose that, as the loT device 300 is operational inside an IoT network. Here, the loT device 300 is able to take advantage of the storage space sum of all the devices joining the network, thereby achieving a distributed memory space (DMS) within the loT network that is able to be used in common by all the loT devices joining an loT network. Each time an IoT device 300 receives new data, it splits the new data into fixed size chunks and sends these parsed data chunks to IoT devices that have enough free/available memory space in the SSS 390.

When reading from the DMS, the loT device 300 may either request a data chunk specifically or a whole data file, by broadcasting a data read request. The other devices are in charge of replying to the request and providing the data, if it is available. Therefore, in this manner, the requesting device is not obliged to know which device(s) store(s) the respective data chunks.

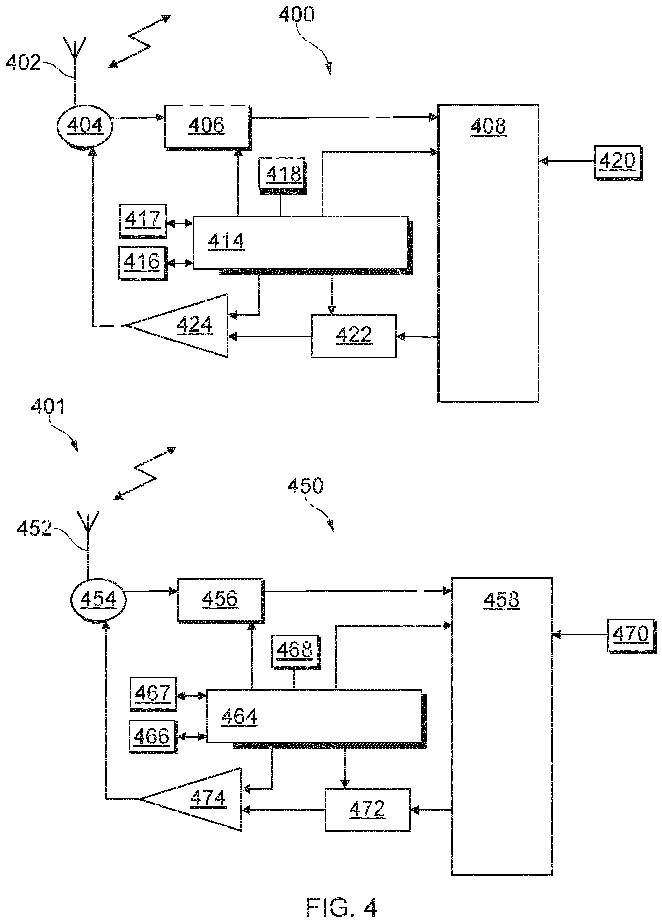

Referring now to FIG. 4, detailed block diagrams of non-OS embedded devices communicating in a communication network 401 adapted in accordance with some examples. For ease of explanation, the diagrams are referred to as a sending device 400 communicating with a receiving device 450 in a communication network, for example an loT communication network, are illustrated. The illustration in FIG. 4 is limited to two non-OS embedded devices, from a plurality of non-OS embedded devices, such as a plurality of loT devices, solely for ease of explanation. In practice, the loT communication network 401 may comprise many such devices.

The sending device 400, e.g., a first non-OS embedded device, contains an antenna 402, for sending and receiving transmissions, coupled to an antenna switch or duplexer 404 that provides isolation between receive and transmit chains within the sending device 400. One or more receiver chains, as known in the art, includes receiver front-end circuitry 406 (effectively providing reception, filtering and intermediate or base-band frequency conversion) and configured to receive a new data chunk. The receiver front-end circuitry 406 is coupled to a signal processor 408 (generally realized by a digital signal processor (DSP)). A skilled artisan will appreciate that the level of integration of receiver circuits or components may be, in some instances, implementation-dependent.

A controller 414 maintains overall operational control of the sending device 400. The controller 414 is also coupled to the receiver front-end circuitry 406 and the signal processor 408. In some examples, the controller 414 is also coupled to a frequency generation circuit 417 and a memory device 416 that selectively stores operating regimes, such as decoding/encoding functions, synchronization patterns, code sequences, and the like. In accordance with examples herein described, the memory device 416 comprises at least one memory that is configured to have a first portion of memory reserved for the non-OS embedded device and a second portion of memory reserved and available for at least one other non-OS embedded device from the plurality of non-OS embedded devices within the communication network 401 to use. In some examples, the at least one memory may comprise read only memory, ROM, 310, a network shared ROM 320, a random access memory, RAM, 330, a network shared RAM 340, at least one flash memory 350, 370 and at least one network shared flash 360, 380. A timer 418 is operably coupled to the controller 414 to control the timing of operations (e.g., transmission or reception of time-dependent signals) within the sending device 400.

As regards the transmit chain, this may include an optional input interface 420, coupled in series through transmitter/modulation circuitry 422 and a power amplifier 424 to the antenna 402, antenna array, or plurality of antennas. The transmitter/ modulation circuitry 422 and the power amplifier 424 are operationally responsive to the controller 414. The signal processor 408 in the transmit chain may be implemented as distinct from the signal processor in the receive chain. Alternatively, a single processor may be used to implement a processing of both transmit and receive signals, as shown in FIG. 4. Clearly, the various components within the sending device 400 can be realized in discrete or integrated component form, with an ultimate structure therefore being an application-specific or design selection.

In some examples, the sending device 400 is a first non-OS embedded device of a plurality of non-OS embedded devices. The signal processor 408 is configured to determine whether the memory device 416 comprising at least one memory has capacity to store the new data chunk; and in response to the at least one memory not having capacity to store the new data chunk, the signal processor and transmitter (e.g., transmitter/modulation circuitry 422) are configured to send a storage request message to at least one of the plurality of non-OS embedded devices. In this manner, if the first non-OS embedded device determines that it has limited storage capacity in its memory, it is able to send a storage request message to other devices to store the data that it requires. In some examples, the storage request message may be one of: a write_data_request command; a broadcast storage request message; a multicast storage request message; a storage request message that is directly sent to an identified one of the plurality of non-OS embedded devices indicated by a data mapping algorithm employed by the signal processor. In some examples, depending on the network configuration, the developer may choose the best suited type of communication: e.g., device to device (unicast), device to multiple devices (multicast), device to all devices (broadcast). Unicast is an efficient method for transmitting data only to one specific node, whilst broadcast is useful when all the nodes require the same update. However, broadcasts generate a lot of network traffic. When not all nodes require the same update, multicast is more efficient than broadcast, thereby allowing multiple nodes (that are part of the same group) to be updated at the same time. In some examples, the write_data_request command and the data chunk may be identified by a data chunk identifier, file_id, chunk_id, and a data file_length. In this manner, a variety of ways are provided to enable the data to be distributed between and requested from the plurality of non-OS embedded devices.

In some examples, the signal processor 408 may be configured to divide the new data chunk into fixed-size parsed data chunks and the storage request message may be configured to include at least a portion of the fixed-size parsed data chunks. In this manner, the distributed data chunks can be readily handled by multiple devices as each device is configured to store parsed data chunks of the same size.

FIG. 4 also shows a high-level block diagram of the receiving device 450, which contains an antenna 452, for transmitting or receiving transmissions, coupled to an antenna switch or duplexer 454 that provides isolation between receive and transmit chains within the receiving device 450. One or more receiver chains, as known in the art, include receiver front-end circuitry 456 (effectively providing reception, filtering and intermediate or base-band frequency conversion). The receiver front-end circuitry 456 is coupled to a signal processor 458 (generally realized by a digital signal processor (DSP)). A skilled artisan will appreciate that the level of integration of receiver circuits or components may be, in some instances, implementation-dependent.

A controller 464 maintains overall operational control of the receiving device 450. The controller 464 is also coupled to the receiver front-end circuitry 456 and the signal processor 458. In some examples, the controller 464 is also coupled to a frequency generation circuit 467 and a memory device 466 that selectively stores operating regimes, such as decoding/encoding functions, synchronization patterns, code sequences, and the like. In accordance with examples herein described, the memory device 466 comprises at least one memory that is configured to have a first portion of memory reserved for the non-OS embedded device and a second portion of memory reserved and available for at least one other non-OS embedded device from the plurality of non-OS embedded devices within the communication network 401 to use. In some examples, the at least one memory may comprise read only memory, ROM, 310, a network shared ROM 320, a random access memory, RAM, 330, a network shared RAM 340, at least one flash memory 350, 370 and at least one network shared flash 360, 380. A timer 468 is operably coupled to the controller 464 to control the timing of operations (e.g., transmission or reception of time-dependent signals) within the receiving device 450. In accordance with examples herein described, the receiving device 450, e.g., at least one of the plurality of non-OS embedded devices, is configured to receive and store the at least a portion of the fixed size parsed data chunks for use by the sending device 400, (e.g., the first non-OS embedded device.

As regards the transmit chain, this includes an optional input interface 470, coupled in series through transmitter/modulation circuitry 472 and a power amplifier 474 to the antenna 452, antenna array, or plurality of antennas. The transmitter/ modulation circuitry 472 and the power amplifier 474 are operationally responsive to the controller 464.

The signal processor 458 in the transmit chain may be implemented as distinct from the signal processor in the receive chain. Alternatively, a single processor may be used to implement a processing of both transmit and receive signals, as shown in FIG. 4. Clearly, the various components within the receiving device 450 can be realized in discrete or integrated component form, with an ultimate structure therefore being an application-specific or design selection.

In some examples, the signal processor 458 and transceiver (e.g., transmitter/modulation circuitry 472 and receiver front-end circuitry 456) of the receiving device 450 are configured to receive the storage request message from the transmitting device 400, e.g., the first non-OS embedded device, and the signal processor 458 is configured to determine whether (or not) the memory device 466 that comprises the at least one memory has sufficient available memory capacity to store the received data chunk, and the at least one memory is configured to store the received data chunk in response thereto. In some examples, the signal processor 458 and transmitter/modulation circuitry 472 may be further configured to transmit a data chunk request to the transmitting device 400 in response to the received storage request message and the the signal processor 458 may be configured to determine whether that the at least one memory has sufficient available memory capacity to store the received data chunk; and receive the received data chunk in response to the transmitted data chunk request. In this manner, the receiving device 450 is capable of storing the data chunk immediately if it is provided within the storage request message, or alternatively it is capable of requesting a transmission of the data chunk.

In some examples, in response to the transmitting device 400 having received multiple requests for the data chunk from the plurality of non-OS embedded devices including receiving device 450, the signal processor 408 of the transmitting device 400 may be configured to select a request from one of the plurality of non-OS embedded devices, based on a respective one of the requests being indicative of at least one of: a quality of service, QoS, a proximity-based criteria of a sending device, a load-based analysis. In this manner, the storage of data can be more efficiently and effectively handled throughout the communication network/within the DMS.

In some examples, in response to the chunk of data being identified as a high priority chunk of data by the signal processor 408 or 458, the plurality of devices in the communication network, e.g., the plurality of non-OS embedded devices, may be configured to each store the same data chunk in their respective memory device 416, 466. In this manner, critical data to the non-OS embedded devices can be readily accessed from a plurality of other non-OS embedded devices, thereby reducing delays and re-transmission risks.

In some examples, the storage request message sent by transmitting device 400 may comprise an over-the-air, OTA, system update data file transfer that is sent to a plurality of different receiving devices 450, e.g., plurality of non-OS embedded devices, in the communication network, wherein the data file transfer may be divided into multiple data chunks and respective data chunks are stored temporarily or permanently in the memory devices of different embedded devices across the communication network. Here, it is envisaged that in some examples the developer can set a predefined constant variable (say, a *delta_t*) to a specific time amount value, when implementing an OTA update algorithm. In this instance, for example, each time a non-OS embedded device receives a chunk with the 'permanent flag' set on 'false', say, the non-OS embedded device automatically deletes it after the *delta_t* time has passed. In contrast, in this example, all the other data chunks, that have the 'permanent flag' set on 'true', may only be deleted on request.

In some examples, the transmitting device 400 may be subsequently configured to receive the OTA system update data file transfer from at least one of the plurality of different non-OS embedded devices in the communication network 401 and, once validated, load the OTA system update data file transfer into its memory 416 by an overwrite operation of the existing system data file. In some examples, the transmitting device 400 may be configured to perform a write operation of its existing system data file to the plurality of different embedded devices in the communication network, in order to provide a back-up of the existing system data file prior to an overwrite operation of the existing system data file. In this manner, a better usage of memory resources throughout the communication network 401 may be achieved.

In some examples, at least one of: the OTA system update data file transfer, the back-up of the existing system data file prior to an overwrite operation of the existing system data file, may be configured to be available to the plurality of different non-OS embedded devices in the communication network. In this manner, by over-writing existing system data, which is no longer required, the memory resource within the non-OS embedded devices is better utilised.

In some examples, the signal processor 408, 458 and transmitter 422, 472 of at least one of: the transmitting device 400 (e.g., first non-OS embedded device), the receiving device 450 (e.g., second non-OS embedded device) may be configured to determine that the embedded device where it resides requires data, and in response thereto sends a data request message in the communication network 401 to other embedded devices. Such a data request message may be for one of: a data chunk or a whole data file. In this manner, a mechanism is provided to identify where data may be located within the communication network 401 that individual devices require, and obtain that data.

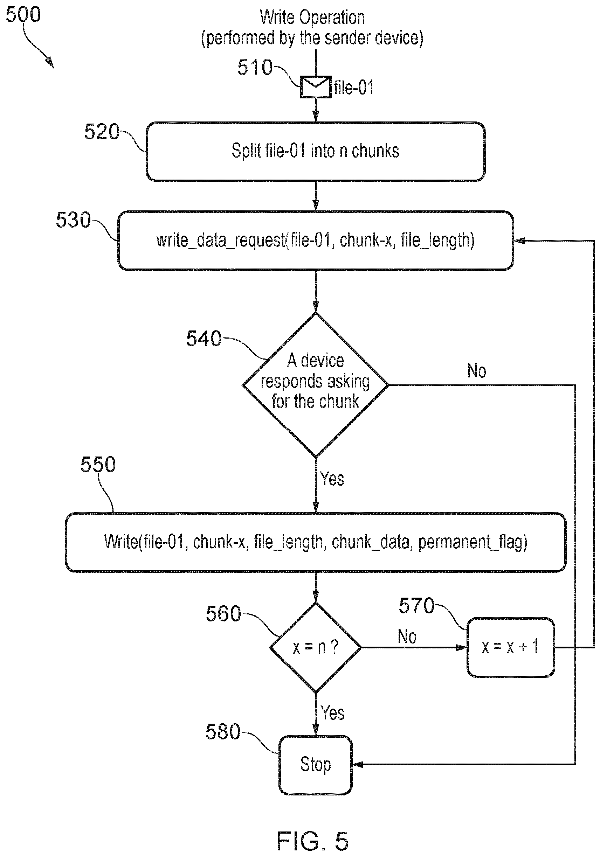

Referring now to FIG. 5, one example of a flowchart 500 of a device performing a write operation, is illustrated according to examples herein described. When a device, such as an loT device, receives at 510 a new data file, it splits the data into standardly sized data chunks at 520 and sends them to other devices in the network. Let us refer to this device as the sending device. At 530, the write_data_requst(file_id, chunk_id, file_length) command is broadcast so that all the receiving devices in the network check if the chunk (of received standardly sized data), where a data chunk is a byte array of a fixed size that is uniquely identifiable by the file_id and the chunk_id, fits inside their available memory in their SSS 390. In some examples, the receiving device may also check if the received chunk already exists in their SSS 390, and if so the receiving device may be configured to notify the sender, who may then decide, in response thereto, to abort the write process of the current chunk.

In some examples, in order to provide for scalability and improve robustness, it is envisaged that various methods for mapping the data onto devices may be used. It is envisaged that one example data mapping algorithm that may be employed is consistent hashing. In this regard, instead of broadcasting a write_data_request command into the loT network at 530, in order to determine who can store the current chunk, the sending device may use a mapping algorithm and just directly send the write command to a specific device, that is indicated by the data mapping algorithm. In this context, consistent hashing can help distribute the data chunks uniformly across the devices in the network, which may be an IoT device within an IoT network. The goal when using a data mapping algorithm, such as consistent hashing, is to minimize the number of chunks that need to be moved when devices are added to or removed from the network, thus reducing the impact of these changes on the overall network. This may be achieved by ensuring that each chunk is assigned to a device, based on a hash function, which provides a consistent mapping between chunks and devices. Each device in consistent hashing receives a set of chunks based on a hash algorithm. When a new chunk is added, it is given to the device whose range the chunk's hash value falls within. Only the chunks that fall within its range should be remapped to another device in order to add or delete a device. Thus, a data mapping algorithm such as consistent hashing ensures that chunks are distributed equally among devices, which can enhance the communication network performance and scalability. In such an example where a chunk/data mapping algorithm is used, it is envisaged that a hash table would be stored and frequently updated at the network level.

Returning to FIG. 5, if there is no device that is already storing the chunk and a receiving device has enough free available memory in the SSS 390, the receiving device responds, asking for the respective chunk at 540. In some examples, if there are multiple receiving devices, a most appropriate/best suited one shall be chosen using, say, quality of service (QoS) mechanisms (e.g., measured QoS parameters), proximity-based criteria or load-based methods, or indeed any other methods for selecting a most appropriate/best suited device to receive (and subsequently distributed the data that would be stored in its respective SSS 390). In some examples, it is envisaged that multiple devices may be configured to store the same chunk, if that chunk of data is critical and new devices will need access to the chunk from within the loT network.

In the context of examples herein described, it is envisaged that a data chunk may be identified as important, critical or high priority. For example, the data chunk may be considered critical with an indication on a critical flag, e.g., akin to the aforementioned 'permanent' flag, which may be added as argument in the write(file_id, chunk_id, file_length, chunk_data, permanent_flag, critical_flag) function by the developer implementing an associated algorithm. A similar approach could be adopted with an 'important' data chunk, or an 'high priority' data chunk, etc. Whenever a non-OS embedded device that already holds a critical application (envisaged in some examples as being predefined on each non-OS embedded device, at the device/application level by the developer) decides to receive a new version, the critical flag is automatically set on 'true'. Otherwise, the developer is responsible for determining those applications that are critical. This helps in cases where an application/chunk should have high redundancy. This decision regarding the redundancy level of a chunk may be established in the data mapping algorithm such as if the redundancy level is higher than '1' (the default), the data chunk may be mapped to multiple nodes instead of just one node.

At 550, the sending device then sends the data chunk to the receiving device using a write(file_id, chunk_id, file_length, chunk_data, permanent_flag) command. In some examples, the file_id, chunk_id and file_length are to be stored as the header of each chunk, followed by the chunk_data, thereby allowing the original data file to be recreated correctly at any time. In some examples, it is envisaged that the receiving device may choose the memory type where the data is stored, depending on the permanent_flag provided in the command. For example, if the data is to be permanently stored, the receiving device will choose the shared flash 360, 380 or shared ROM 320, whereas if the data is temporary, the receiving device will choose between the shared RAM 340 and the shared flash 360, 380. In some examples, the data marked as temporary in shared flash 360, 380 may be automatically deleted after a certain timeout. In some examples, it is envisaged that the sending device will store the remaining chunks in the same manner.

In flowchart 500, the sending device then determines if the chunk to be sent is the final chunk at 560 (e.g., chunk 'x' = number of chunks 'n'). If the chunk to be sent is not the final chunk at 560, then the sending device moves onto the next chunk at 570 (x:=x+1) and the flowchart loops to 530. However, if the chunk to be sent is the final chunk at 560, then the write operation performed by the sending device is stopped at 580.

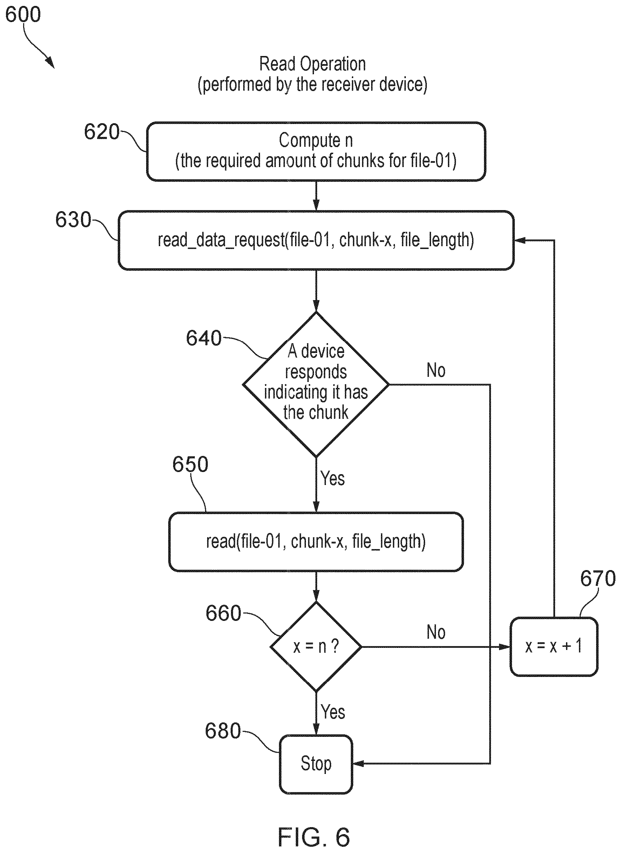

Referring now to FIG. 6, one example of a flowchart 600 of a device performing a read operation is illustrated, according to examples herein described. Here, a receiving device requires a certain data file, having a specific file_id and file_length from the DMS within the loT network. At 620, using the fixed chunk size, the receiving device computes the number ('n') of chunks of the file and starts requesting them, for example 'one by one'. At 630, the receiving device checks whether any device is currently storing the needed chunk, using, for example, by broadcasting a read_data_requst(file_id, chunk_id, file_length) command into the loT network. In response thereto, all the devices within the loT network check at 640 whether (or not) they store the requested chunk. If no device finds the requested chunk at 640, and there is no response, then the flowchart jumps to 680 and stops.

If a device finds the requested chunk, that device (which assumes a role of the aforementioned sending device) responds, sending a data_available(file_id, chunk_id, file_length) command to the receiving device, announcing that it has stored the requested chunk in its respective SSS 390. The receiving device then sends a read(file_id, chunk_id, file_length) specifically to that sending device, asking for the chunk data. The receiving device will ask for the remaining chunks in the same manner.

In flowchart 600, the receiving device then determines if the received chunk is the final chunk to be received at 660 (e.g., chunk 'x' = number of chunks 'n'). If the chunk to be received is not the final chunk at 660, then the receiving device moves onto the next chunk at 670 (x:=x+1) and the flowchart loops to 630. However, if the received chunk is the final chunk at 660, then the read operation performed by the receiving device is stopped at 680.

In some examples, it is envisaged that the data stored in the shared ROM, such as shared ROM 320 in FIG. 3, may be used for the recovery process of a default firmware or any other settings/configuration in case reverting one or more device(s) to a default state is needed. It is envisaged that this recovery process may be useful should a device attempt to update its current firmware, and fails, for example if there was connection error or the device was unplugged, etc., and the OTA transfer was not completed. In such a situation, it is envisaged that the device may well need to reboot and return to a stable functioning state.

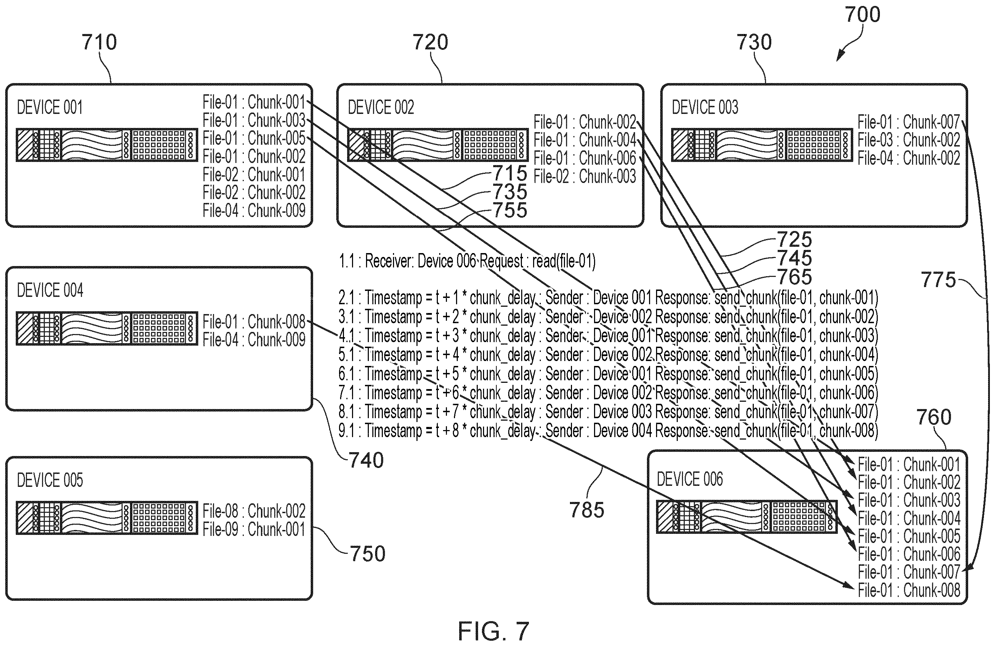

FIG. 7 illustrates one example of messages 700 between a number of sending devices (sending device-1 710, sending device-2 720, sending device-3 730, sending device-4 740, sending device-5 750 ... in this example) and a receiving device 760 in a network, such as an loT network, where chunk data may use a chunk header that may also contain a chunk_delay value when a receiving device requests files, according to some examples herein described. In this example, each chunk of data comprises a chunk header that may also contain a chunk_delay value. In this example, the chunk_delay value can be used whenever a read(file_id) command is broadcast by a receiving device 760.

When receiving device 760 requires all chunks of a certain file, the receiving device 760 broadcasts a read(file_id) command to the entire network and expects all the chunks to be sent back in a specific order, given by the chunk_id and the chunk_delay, which is a constant value known by all devices in the network. When another device receives this read(file_id) command, the device computes the time_stamp when the chunk should be sent (time_stamp = chunk_delay * chunk_id) and then sends the chunk at the moment equal to the computed time stamp. In this illustrated example, each of the sending devices 710, 720, 730, 740 that stores a chunk marked with the respective file_id responds directly with the chunk data, after the chunk_delay*chunk_id time has elapsed. In the illustration of FIG. 7, the following order of messages are sent from a sending device to the receiving device 760:
sending device-1 710 transmits file-1, chunk-1 in message 715, followed by
sending device-2 720 transmits file-1, chunk-2 in message 725, followed by
sending device-1 710 transmits file-1, chunk-3 in message 735, followed by
sending device-1 720 transmits file-1, chunk-4 in message 745, followed by
sending device-1 710 transmits file-1, chunk-5 in message 755, followed by
sending device-1 720 transmits file-1, chunk-6 in message 765, followed by.
sending device-3 730 transmits file-1, chunk-7 in message 775, followed by.
sending device-4 740 transmits file-1, chunk-8 in message 785, and so on.

In this manner, the network simulates an automatic and continuous file transfer as could normally be achieved, but where the data is received in time-coordinated chunks from multiple sending devices.

The sending devices can send the chunks only to the receiving device 760 that has requested the file_id, or to the whole network, by broadcasting each chunk. It is envisaged that the latter case of broadcasting each chunk to the whole network may be used to perform, say, periodic updates across the entire network. As illustrated, employing the example messages 700 in FIG. 7 is much more efficient than the known arrangement illustrated in FIG. 2.

Examples herein described find particular use with an OTA transfer of new firmware onto one or more devices in a network, by storing the new firmware file and the old firmware back-up in a distributed manner inside the network, which may be an IoT network. Using this approach, the device that requires an OTA update is able to receive the update even if the device itself is not capable of storing it in its own memory. Additionally, if there are multiple devices requiring the same firmware update, they may access the same file stored in the DMS, thereby reducing the overall OTA update time. In some implementations, besides an OTA firmware update, the proposed DMS may be used for saving large log or database files at the network level.

In the foregoing specification, examples have been described with reference to specific embodiments and applications. It will, however, be evident that various modifications and changes may be made therein without departing from the scope of the invention as set forth in the appended claims and that the claims are not limited to the specific examples described above.

The connections as discussed herein may be any type of connection suitable to transfer signals from or to the respective nodes, units or devices, for example via intermediate devices. Accordingly, unless implied or stated otherwise, the connections may for example be direct connections or indirect connections. The connections may be illustrated or described in reference to being a single connection, a plurality of connections, unidirectional connections, or bidirectional connections. However, different embodiments may vary the implementation of the connections. For example, separate unidirectional connections may be used rather than bidirectional connections and vice versa. Also, a plurality of connections may be replaced with a single connection that transfers multiple signals serially or in a time multiplexed manner. Likewise, single connections carrying multiple signals may be separated out into various different connections carrying subsets of these signals. Therefore, it is envisaged that many options exist for transferring signals. Those skilled in the art will recognize that the architectures depicted herein are merely exemplary, and that in fact many other architectures can be implemented which achieve the same functionality.

Any arrangement of components to achieve the same functionality is effectively 'associated', such that the desired functionality is achieved. Hence, any two components herein combined to achieve a particular functionality can be seen as 'associated with' each other, such that the desired functionality is achieved, irrespective of architectures or intermediary components. Likewise, any two components so associated can also be viewed as being 'operably connected,' or 'operably coupled,' to each other to achieve the desired functionality.

Furthermore, those skilled in the art will recognize that boundaries between the above described operations are merely illustrative. The multiple operations may be combined into a single operation, a single operation may be distributed in additional operations and operations may be executed at least partially overlapping in time. Moreover, alternative example embodiments may include multiple instances of a particular operation, and the order of operations may be altered in various other embodiments. Also for example, in one embodiment, the illustrated examples may be implemented as circuitry located on a single integrated circuit or within a same device.

In some examples, the various components within the device, such as an loT device, can be realized in discrete or integrated component form, with an ultimate structure therefore being an application-specific or design selection. As the illustrated example embodiments may, for the most part, be implemented using electronic components and circuits known to those skilled in the art, details will not be explained in any greater extent than that considered necessary as illustrated below, for the understanding and appreciation of the underlying concepts herein described and in order not to obfuscate or distract from the teachings herein described. A skilled artisan will appreciate that the level of integration of a device's circuits or components may be, in some instances, implementation-dependent.

Also, for example, the examples, or portions thereof, may implemented as soft or code representations of physical circuitry or of logical representations convertible into physical circuitry, such as in a hardware description language of any appropriate type. Also, the examples herein described are not limited to physical devices or units implemented in non-programmable hardware, but can also be applied in programmable devices or units able to perform the desired OTA updates by operating in accordance with suitable program code, such as minicomputers, personal computers, notepads, personal digital assistants, electronic games, automotive and other embedded communication networks, cell phones and various other wireless devices, commonly denoted in this application as 'devices'. However, other modifications, variations and alternatives are also envisaged as being possible. The specifications and drawings are, accordingly, to be regarded in an illustrative rather than in a restrictive sense.

In the claims, any reference signs placed between parentheses shall not be construed as limiting the claim. The word 'comprising' does not exclude the presence of other elements or steps then those listed in a claim. Furthermore, the terms 'a' or 'an,' as used herein, are defined as one or more than one. Also, the use of introductory phrases, such as 'at least one' and 'one or more' in the claims should not be construed to imply that the introduction of another claim element, say by the indefinite articles 'a' or 'an', etc., limits any particular claim containing such introduced claim element to inventions containing only one such element, even when the same claim includes the introductory phrases 'one or more' or 'at least one' and indefinite articles such as 'a' or 'an.' The same holds true for the use of definite articles. Unless stated otherwise, terms such as 'first' and 'second' are used to arbitrarily distinguish between the elements such terms describe. Thus, these terms are not necessarily intended to indicate temporal or other prioritization of such elements. The mere fact that certain measures are recited in mutually different claims does not indicate that a combination of these measures cannot be used to advantage.

## Claims

1. A communication network (401) for operating a distributed memory system, DMS, the communication network (401) comprising a plurality of non-operating system, non-OS, embedded devices having at least one memory (390) wherein the at least one memory (390) of the plurality of non-OS embedded devices is configured to have a first portion of memory (310, 330, 350, 370) reserved for the non-OS embedded device and a second portion of memory (320, 340, 360, 380) reserved and available for at least one other non-OS embedded device from the plurality of non-OS embedded devices within the communication network (401) to use;
wherein a first non-OS embedded device (400) of the plurality of non-OS embedded devices comprises:
a first receiver (406) configured to receive a data chunk;
a first transmitter (422); and
a signal processor (408) operably coupled to the first receiver (406), the first transmitter (422) and the at least one memory (390), and configured to determine whether the at least one memory (390) has memory capacity (320, 340, 360, 380) to store the received data chunk;
and in response to the at least one memory (390) not having memory capacity (320, 340, 360, 380) to store the received data chunk, the first signal processor (408) and first transmitter (422) are configured to send a storage request message to at least one of the plurality of non-OS embedded devices (450); and
wherein the storage request message comprises at least one of: a write_data_request command; a broadcast storage request message; a multicast storage request message; a storage request message that is directly sent to an identified one of the plurality of non-OS embedded devices indicated by a data mapping algorithm employed by the signal processor.

2. The communication network (401) of Claim 1 wherein the first signal processor (408) is configured to divide the received data chunk into fixed-size parsed data chunks and the storage request message is configured to include at least a portion of the fixed-size parsed data chunks, wherein the at least one of the plurality of non-OS embedded devices is configured to store the at least a portion of the fixed size parsed data chunks for use by the first non-OS embedded device.

3. The communication network (401) of Claim 1 or 2 wherein a second non-OS embedded device (450) is the at least one of the plurality of non-OS embedded devices and comprises:
a second receiver (456) configured to receive the storage request message from the first non-OS embedded device (400),
at least one memory (390) operably coupled to the second receiver (456); and
a second signal processor (458) operably coupled to the second receiver (456) and the at least one memory (390) and configured to determine that the at least one memory (390) has available memory capacity (320, 340, 360, 380) to store the received data chunk, and the at least one memory (390) is configured to store the received data chunk in response thereto.

4. The communication network (401) of Claim 3 wherein the second non-OS embedded device (450) further comprises a second transmitter (472) operably coupled to the second signal processor (458) and the at least one memory (390), wherein the second signal processor (458) is further configured to:
transmit a data chunk request to the first non-OS embedded device (400) in response to the received storage request message and a determination that the at least one memory (390) has available memory capacity (320, 340, 360, 380) to store the received data chunk; and
receive the received data chunk in response to the transmitted data chunk request.

5. The communication network (401) of Claim 4 wherein, in response to the first non-OS embedded device (400) having received multiple requests for the data chunk from the plurality of non-OS embedded devices, the processor (408) of the first non-OS embedded device (400) is configured to select a request from one of the plurality of non-OS embedded devices being indicative of at least one of: a quality of service, QoS, a proximity-based criteria of a sending device, a load-based analysis.

6. The communication network (401) of any of preceding Claim, wherein the storage request message comprises an over-the-air, OTA, system update data file transfer that is sent to a plurality of different non-OS embedded devices in the communication network (401), wherein the data file transfer is divided into multiple data chunks and respective data chunks of the multiple data chunks are stored temporarily or permanently on a different plurality of non-OS embedded devices across the communication network (401).

7. The communication network (401) of Claim 6 wherein the first non-OS embedded device is configured to receive the OTA system update data file transfer from at least one of the plurality of different non-OS embedded devices in the communication network (401) and, once validated, load the OTA system update data file transfer into its at least one memory (390) by an overwrite operation of an existing system data file.

8. The communication network (401) of Claim 7 wherein the first non-OS embedded device is configured to perform a write operation of the existing system data file to the plurality of different non-OS embedded devices in the communication network (401) that provides a back-up of the existing system data file prior to an overwrite operation of the existing system data file.

9. The communication network (401) of Claim 7 or 8 wherein at least one of: the OTA system update data file transfer, a back-up of an existing system data file prior to an overwrite operation of the existing system data file, is configured to be available to the plurality of different non-OS embedded devices in the communication network (401).

10. The communication network (401) of any preceding Claim wherein the signal processor (408, 458) and transmitter (422, 472) of at least one of: the first non-OS embedded device (400), the second non-OS embedded device (450) is configured to determine that the non-OS embedded device (450) where it resides requires data, and in response thereto sends a data request message in the communication network (401) to other non-OS embedded devices, wherein the data request message is a request for one of: a data chunk or a whole data file.

11. The communication network (401) of any preceding Claim wherein the communication network (401) is configured as an Internet of Things, loT, network.

12. A method for operating a distributed memory system, DMS, by a communication network (401), the method comprising:
providing a plurality of non-OS embedded devices operational within the communication network (401) with at least one memory (390);
configuring the at least one memory (390) of the plurality of non-OS embedded devices to comprise:
a first portion of memory (310, 330, 350, 370) reserved for the non-OS embedded device where the at least one memory (390) resides; and
a second portion of memory (320, 340, 360, 380) reserved and available for at least one other non-OS embedded device from the plurality of non-OS embedded devices within the communication network (401) to use;
wherein a first non-OS embedded device (400) of the plurality of non-OS embedded devices comprises: a first receiver (406) configured to receive a data chunk;
a first transmitter (422); and a signal processor (408) operably coupled to the first receiver (406), the first transmitter (422) and the at least one memory (390);
the method further comprising the signal processor determining whether the at least one memory (390) has memory capacity (320, 340, 360, 380) to store the received data chunk;
and in response to the at least one memory (390) not having memory capacity (320, 340, 360, 380) to store the received data chunk, the first signal processor (408) and first transmitter (422) sending a storage request message to at least one of the plurality of non-OS embedded devices (450); and
wherein the storage request message comprises at least one of: a write_data_request command; a broadcast storage request message; a multicast storage request message; a storage request message that is directly sent to an identified one of the plurality of non-OS embedded devices indicated by a data mapping algorithm employed by the signal processor.

13. The method of Claim 12 wherein the second non-OS embedded device (450) further comprises a second transmitter (472) operably coupled to the second signal processor (458) and the at least one memory (390),
the method further comprising the second signal processor (458):
transmitting a data chunk request to the first non-OS embedded device (400) in response to the received storage request message and a determination that the at least one memory (390) has available memory capacity (320, 340, 360, 380) to store the received data chunk; and
receiving the received data chunk in response to the transmitted data chunk request.

14. The method of Claim 13 wherein, in response to the first non-OS embedded device (400) having received multiple requests for the data chunk from the plurality of non-OS embedded devices,
further comprising the processor (408) of the first non-OS embedded device (400) is selecting a request from one of the plurality of non-OS embedded devices being indicative of at least one of: a quality of service, QoS, a proximity-based criteria of a sending device, a load-based analysis.

15. The method of any of Claim 12 to 14, wherein the storage request message comprises an over-the-air, OTA, system update data file transfer that is sent to a plurality of different non-OS embedded devices in the communication network (401),
further comprising dividing the data file transfer into multiple data chunks and storing respective data chunks of the multiple data chunks temporarily or permanently on a different plurality of non-OS embedded devices across the communication network (401).

## Patentansprüche

1. Kommunikationsnetzwerk (401) zum Betreiben eines verteilten Speichersystems, DMS, wobei das Kommunikationsnetzwerk (401) eine Vielzahl eingebetteter Nicht-Betriebssystem(Nicht-OS)-Vorrichtungen mit mindestens einem Speicher (390) umfasst, wobei der mindestens eine Speicher (390) der Vielzahl eingebetteter Nicht-OS-Vorrichtungen dazu ausgelegt ist, einen ersten Speicherabschnitt (310, 330, 350, 370), der für die eingebettete Nicht-OS-Vorrichtung reserviert ist, und einen zweiten Speicherabschnitt (320, 340, 360, 380), der für mindestens eine andere eingebettete Nicht-OS-Vorrichtung aus der Vielzahl eingebetteter Nicht-OS-Vorrichtungen innerhalb des Kommunikationsnetzwerks (401) reserviert und zur Verwendung verfügbar ist, aufzuweisen;
wobei eine erste eingebettete Nicht-OS-Vorrichtung (400) der Vielzahl eingebetteter Nicht-OS-Vorrichtungen umfasst:
einen ersten Empfänger (406), der dazu ausgelegt ist, einen Datenblock zu empfangen;
einen ersten Sender (422) und
einen Signalprozessor (408), der betriebsfähig mit dem ersten Empfänger (406), dem ersten Sender (422) und dem mindestens einen Speicher (390) gekoppelt ist und dazu ausgelegt ist, zu bestimmen, ob der mindestens eine Speicher (390) eine Speicherkapazität (320, 340, 360, 380) zum Speichern des empfangenen Datenblocks aufweist;
und wobei als Reaktion darauf, dass der mindestens eine Speicher (390) keine Speicherkapazität (320, 340, 360, 380) zum Speichern des empfangenen Datenblocks aufweist, der erste Signalprozessor (408) und der erste Sender (422) dazu ausgelegt sind, eine Speicherungsanforderungsnachricht an mindestens eine der Vielzahl eingebetteter Nicht-OS-Vorrichtungen (450) zu senden; und
wobei die Speicherungsanforderungsnachricht mindestens eines umfasst von: einem write_data_request-Befehl; einer Broadcast-Speicherungsanforderungsnachricht; einer Multicast-Speicherungsanforderungsnachricht; einer Speicherungsanforderungsnachricht, die direkt an eine identifizierte der Vielzahl eingebetteter Nicht-OS-Vorrichtungen gesendet wird, die durch einen Datenzuordnungsalgorithmus angegeben wird, der durch den Signalprozessor eingesetzt wird.

2. Kommunikationsnetzwerk (401) nach Anspruch 1, wobei der erste Signalprozessor (408) dazu ausgelegt ist, den empfangenen Datenblock in geparste Datenblöcke fester Größe zu unterteilen, und die Speicherungsanforderungsnachricht dazu ausgelegt ist, mindestens einen Abschnitt der geparsten Datenblöcke fester Größe zu enthalten, wobei die mindestens eine der Vielzahl eingebetteter Nicht-OS-Vorrichtungen dazu ausgelegt ist, den mindestens einen Abschnitt der geparsten Datenblöcke fester Größe zur Verwendung durch die erste eingebettete Nicht-OS-Vorrichtung zu speichern.

3. Kommunikationsnetzwerk (401) nach Anspruch 1 oder 2, wobei eine zweite eingebettete Nicht-OS-Vorrichtung (450) die mindestens eine der Vielzahl eingebetteter Nicht-OS-Vorrichtungen ist und umfasst:
einen zweiten Empfänger (456), der dazu ausgelegt ist, die Speicherungsanforderungsnachricht von der ersten eingebetteten Nicht-OS-Vorrichtung (400) zu empfangen,
mindestens einen Speicher (390), der betriebsfähig mit dem zweiten Empfänger (456) gekoppelt ist; und
einen zweiten Signalprozessor (458), der betriebsfähig mit dem zweiten Empfänger (456) und dem mindestens einen Speicher (390) gekoppelt ist und dazu ausgelegt ist, zu bestimmen, dass der mindestens eine Speicher (390) eine verfügbare Speicherkapazität (320, 340, 360, 380) zum Speichern des empfangenen Datenblocks aufweist, und der mindestens eine Speicher (390) dazu ausgelegt ist, den empfangenen Datenblock als Reaktion darauf zu speichern.

4. Kommunikationsnetzwerk (401) nach Anspruch 3, wobei die zweite eingebettete Nicht-OS-Vorrichtung (450) ferner einen zweiten Sender (472) umfasst, der betriebsfähig mit dem zweiten Signalprozessor (458) und dem mindestens einen Speicher (390) gekoppelt ist, wobei der zweite Signalprozessor (458) ferner ausgelegt ist zum:
Übertragen einer Datenblockanforderung an die erste eingebettete Nicht-OS-Vorrichtung (400) als Reaktion auf die empfangene Speicherungsanforderungsnachricht und eine Bestimmung, dass der mindestens eine Speicher (390) verfügbare Speicherkapazität (320, 340, 360, 380) zum Speichern des empfangenen Datenblocks aufweist; und
Empfangen des empfangenen Datenblocks als Reaktion auf die übertragene Datenblockanforderung.

5. Kommunikationsnetzwerk (401) nach Anspruch 4, wobei der Prozessor (408) der ersten eingebetteten Nicht-OS-Vorrichtung (400) als Reaktion darauf, dass die erste eingebettete Nicht-OS-Vorrichtung (400) mehrere Anforderungen für den Datenblock aus der Vielzahl eingebetteter Nicht-OS-Vorrichtungen empfangen hat, dazu ausgelegt ist, eine Anforderung von einer der Vielzahl eingebetteter Nicht-OS-Vorrichtungen auszuwählen, die mindestens eines angibt von: einer Dienstgüte, QoS, einem näherungsbasierten Kriterium einer Sendevorrichtung, einer lastbasierten Analyse.

6. Kommunikationsnetzwerk (401) nach einem der vorhergehenden Ansprüche, wobei die Speicherungsanforderungsnachricht eine Over-The-Air(OTA)-Systemaktualisierungsdateiübertragung umfasst, die an eine Vielzahl verschiedener eingebetteter Nicht-OS-Vorrichtungen in dem Kommunikationsnetzwerk (401) gesendet wird, wobei die Datendateiübertragung in mehrere Datenblöcke unterteilt ist und jeweilige Datenblöcke der mehreren Datenblöcke temporär oder permanent auf einer anderen Vielzahl eingebetteter Nicht-OS-Vorrichtungen über das Kommunikationsnetzwerk (401) gespeichert werden.

7. Kommunikationsnetzwerk (401) nach Anspruch 6, wobei die erste eingebettete Nicht-OS-Vorrichtung dazu ausgelegt ist, die OTA-Systemaktualisierungsdatendateiübertragung von mindestens einer der Vielzahl verschiedener eingebetteter Nicht-OS-Vorrichtungen in dem Kommunikationsnetzwerk (401) zu empfangen und, nachdem sie validiert wurde, die OTA-Systemaktualisierungsdatendateiübertragung durch eine Überschreiboperation einer vorhandenen Systemdatendatei in ihren mindestens einen Speicher (390) zu laden.

8. Kommunikationsnetzwerk (401) nach Anspruch 7, wobei die erste eingebettete Nicht-OS-Vorrichtung dazu ausgelegt ist, eine Schreiboperation der vorhandenen Systemdatendatei an die Vielzahl verschiedener eingebetteter Nicht-OS-Vorrichtungen in dem Kommunikationsnetzwerk (401) durchzuführen, die eine Sicherung der vorhandenen Systemdatendatei vor einer Überschreiboperation der vorhandenen Systemdatendatei bereitstellt.

9. Kommunikationsnetzwerk (401) nach Anspruch 7 oder 8, wobei mindestens eines von der OTA-Systemaktualisierungsdatendateiübertragung, einer Sicherung einer vorhandenen Systemdatendatei vor einer Überschreiboperation der vorhandenen Systemdatendatei dazu ausgelegt ist, für die Vielzahl verschiedener eingebetteter Nicht-OS-Vorrichtungen in dem Kommunikationsnetzwerk (401) verfügbar zu sein.

10. Kommunikationsnetzwerk (401) nach einem der vorhergehenden Ansprüche, wobei der Signalprozessor (408, 458) und der Sender (422, 472) mindestens eines von der ersten eingebetteten Nicht-OS-Vorrichtung (400), der zweiten eingebetteten Nicht-OS-Vorrichtung (450) dazu ausgelegt sind, zu bestimmen, dass die eingebettete Nicht-OS-Vorrichtung (450), in der sie sich befinden, Daten benötigt, und als Reaktion darauf eine Datenanforderungsnachricht in dem Kommunikationsnetzwerk (401) an andere eingebettete Nicht-OS-Vorrichtungen senden, wobei die Datenanforderungsnachricht eine Anforderung für eines ist von: einem Datenblock oder einer gesamten Datendatei.

11. Kommunikationsnetzwerk (401) nach einem der vorhergehenden Ansprüche, wobei das Kommunikationsnetzwerk (401) als ein Internet der Dinge(IdD)-Netzwerk ausgelegt ist.

12. Verfahren zum Betreiben eines verteilten Speichersystems, DMS, durch ein Kommunikationsnetzwerk (401), wobei das Verfahren umfasst:
Versehen einer Vielzahl eingebetteter Nicht-OS-Vorrichtungen, die innerhalb des Kommunikationsnetzwerks (401) betriebsbereit sind, mit mindestens einem Speicher (390);
Konfigurieren des mindestens einen Speichers (390) der Vielzahl eingebetteter Nicht-OS-Vorrichtungen, um zu umfassen:
einen ersten Speicherabschnitt (310, 330, 350, 370), der für die eingebettete Nicht-OS-Vorrichtung reserviert ist, in der sich der mindestens eine Speicher (390) befindet; und
einen zweiten Speicherabschnitt (320, 340, 360, 380), der für mindestens eine andere eingebettete Nicht-OS-Vorrichtung aus der Vielzahl eingebetteter Nicht-OS-Vorrichtungen innerhalb des Kommunikationsnetzwerks (401) reserviert und zur Verwendung verfügbar ist;
wobei eine erste eingebettete Nicht-OS-Vorrichtung (400) der Vielzahl eingebetteter Nicht-OS-Vorrichtungen umfasst: einen ersten Empfänger (406), der dazu ausgelegt ist, einen Datenblock zu empfangen;
einen ersten Sender (422) und einen Signalprozessor (408), der betriebsfähig mit dem ersten Empfänger (406), dem ersten Sender (422) und dem mindestens einen Speicher (390) gekoppelt ist;
wobei das Verfahren ferner umfasst, dass der Signalprozessor bestimmt, ob der mindestens eine Speicher (390) eine Speicherkapazität (320, 340, 360, 380) zum Speichern des empfangenen Datenblocks aufweist;
und wobei als Reaktion darauf, dass der mindestens eine Speicher (390) keine Speicherkapazität (320, 340, 360, 380) zum Speichern des empfangenen Datenblocks aufweist, der erste Signalprozessor (408) und der erste Sender (422) eine Speicherungsanforderungsnachricht an mindestens eine der Vielzahl eingebetteter Nicht-OS-Vorrichtungen (450) senden; und
wobei die Speicherungsanforderungsnachricht mindestens eines umfasst von: einem write_data_request-Befehl; einer Broadcast-Speicherungsanforderungsnachricht; einer Multicast-Speicherungsanforderungsnachricht; einer Speicherungsanforderungsnachricht, die direkt an eine identifizierte der Vielzahl eingebetteter Nicht-OS-Vorrichtungen gesendet wird, die durch einen Datenzuordnungsalgorithmus angegeben wird, der durch den Signalprozessor eingesetzt wird.

13. Verfahren nach Anspruch 12, wobei die zweite eingebettete Nicht-OS-Vorrichtung (450) ferner einen zweiten Sender (472) umfasst, der betriebsfähig mit dem zweiten Signalprozessor (458) und dem mindestens einen Speicher (390) gekoppelt ist,
wobei das Verfahren ferner umfasst, durch den zweiten Signalprozessor (458):
Übertragen einer Datenblockanforderung an die erste eingebettete Nicht-OS-Vorrichtung (400) als Reaktion auf die empfangene Speicherungsanforderungsnachricht und eine Bestimmung, dass der mindestens eine Speicher (390) verfügbare Speicherkapazität (320, 340, 360, 380) zum Speichern des empfangenen Datenblocks aufweist; und
Empfangen des empfangenen Datenblocks als Reaktion auf die übertragene Datenblockanforderung.

14. Verfahren nach Anspruch 13, wobei als Reaktion darauf, dass die erste eingebettete Nicht-OS-Vorrichtung (400) mehrere Anforderungen für den Datenblock von der Vielzahl eingebetteter Nicht-OS-Vorrichtungen empfangen hat,
ferner umfassend, dass der Prozessor (408) der ersten eingebetteten Nicht-OS-Vorrichtung (400) eine Anforderung von einer der Vielzahl eingebetteter Nicht-OS-Vorrichtungen auswählt, die mindestens eines angibt von: einer Dienstgüte, QoS, einem näherungsbasierten Kriterium einer Sendevorrichtung, einer lastbasierten Analyse.

15. Verfahren nach einem der Ansprüche 12 bis 14, wobei die Speicherungsanforderungsnachricht eine Over-The-Air(OTA)-Systemaktualisierungsdateiübertragung umfasst, die an eine Vielzahl verschiedener eingebetteter Nicht-OS-Vorrichtungen in dem Kommunikationsnetzwerk (401) gesendet wird,
ferner umfassend ein Unterteilen der Datendateiübertragung in mehrere Datenblöcke und ein Speichern jeweiliger Datenblöcke der mehreren Datenblöcke temporär oder permanent auf einer anderen Vielzahl eingebetteter Nicht-OS-Vorrichtungen über das Kommunikationsnetzwerk (401).

## Revendications

1. Réseau de communication (401) permettant de faire fonctionner un système de mémoire distribuée, DMS, le réseau de communication (401) comprenant une pluralité de dispositifs intégrés sans système d'exploitation, sans OS, possédant au moins une mémoire (390), l'au moins une mémoire (390) de la pluralité de dispositifs intégrés sans OS étant configurée pour avoir une première partie de mémoire (310, 330, 350, 370) réservée au dispositif intégré sans OS et une deuxième partie de mémoire (320, 340, 360, 380) réservée et disponible pour au moins un autre dispositif intégré sans OS parmi la pluralité de dispositifs intégrés sans OS dans le réseau de communication (401) à utiliser ;
où un premier dispositif intégré sans OS (400) de la pluralité de dispositifs intégrés sans OS comprend :
un premier récepteur (406) configuré pour recevoir un fragment de données ;
un premier émetteur (422) ; et
un processeur de signaux (408) couplé de manière fonctionnelle au premier récepteur (406), au premier émetteur (422) et à l'au moins une mémoire (390), et configuré pour déterminer si l'au moins une mémoire (390) a une capacité de mémoire (320, 340, 360, 380) pour stocker le fragment de données reçu ;
et, en réponse à l'au moins une mémoire (390) n'ayant pas de capacité de mémoire (320, 340, 360, 380) pour stocker le fragment de données reçu, le premier processeur de signaux (408) et le premier émetteur (422) sont configurés pour envoyer un message de demande de stockage à au moins l'un de la pluralité de dispositifs intégrés sans OS (450) ; et
où le message de demande de stockage comprend au moins un élément parmi : une commande de demande d'écriture de données ; un message de demande de stockage de diffusion ; un message de demande de stockage de multidiffusion ; un message de demande de stockage qui est envoyé directement à un dispositif identifié parmi la pluralité de dispositifs intégrés sans OS indiqué par un algorithme de mappage de données employé par le processeur de signaux.

2. Réseau de communication (401) selon la revendication 1, dans lequel le premier processeur de signaux (408) est configuré pour diviser le fragment de données reçu en fragments de données analysés de taille fixe et le message de demande de stockage est configuré pour inclure au moins une partie des fragments de données analysés de taille fixe, où l'au moins un dispositif de la pluralité de dispositifs intégrés sans OS est configuré pour stocker l'au moins une partie des fragments de données analysés de taille fixe pour utilisation par le premier dispositif intégré sans OS.

3. Réseau de communication (401) selon la revendication 1 ou la revendication 2, dans lequel un deuxième dispositif intégré sans OS (450) est l'au moins dispositif de la pluralité de dispositifs intégrés sans OS et comprend :
un deuxième récepteur (456) configuré pour recevoir le message de demande de stockage du premier dispositif intégré sans OS (400),
au moins une mémoire (390) couplée de manière opérationnelle au deuxième récepteur (456) ; et
un deuxième processeur de signaux (458) couplé de manière opérationnelle au deuxième récepteur (456) et à l'au moins une mémoire (390) et configuré pour déterminer que l'au moins une mémoire (390) a une capacité de mémoire disponible (320, 340, 360, 380) pour stocker le fragment de données reçu, et l'au moins une mémoire (390) est configurée pour stocker le fragment de données reçu en réponse à celui-ci.

4. Réseau de communication (401) selon la revendication 3, dans lequel le deuxième dispositif intégré sans OS (450) comprend en outre un deuxième émetteur (472) couplé de manière opérationnelle au deuxième processeur de signaux (458) et à l'au moins une mémoire (390), où le deuxième processeur de signaux (458) est en outre configuré pour :
transmettre une demande de fragment de données au premier dispositif intégré sans OS (400) en réponse au message de demande de stockage reçu et à la détermination que la mémoire (390) possède une capacité de mémoire disponible (320, 340, 360, 380) pour stocker le fragment de données reçu ; et
recevoir le fragment de données reçu en réponse à la demande de fragment de données transmise.

5. Réseau de communication (401) selon la revendication 4, dans lequel, en réponse au fait que le premier dispositif intégré sans OS (400) a reçu de multiples demandes pour le fragment de données provenant de la pluralité de dispositifs intégrés sans OS, le processeur (408) du premier dispositif intégré sans OS (400) est configuré pour sélectionner une demande de l'un de la pluralité de dispositifs intégrés sans OS indiquant au moins l'un parmi : une qualité de service, QoS, un critère basé sur la proximité d'un dispositif émetteur, une analyse basée sur la charge.

6. Réseau de communication (401) selon l'une quelconque des revendications précédentes, dans lequel le message de demande de stockage comprend un transfert de fichier de données de mise à jour de système par liaison radio, OTA, qui est envoyé à une pluralité de différents dispositifs sans OS intégrés dans le réseau de communication (401), où le transfert de fichier de données est divisé en plusieurs fragments de données et des fragments de données respectifs des multiples fragments de données sont stockés temporairement ou de manière permanente sur une pluralité différente de dispositifs sans OS intégrés à travers le réseau de communication (401).

7. Réseau de communication (401) selon la revendication 6, dans lequel le premier dispositif intégré sans OS est configuré pour recevoir le transfert de fichier de données de mise à jour de système OTA depuis au moins l'un de la pluralité de différents dispositifs intégrés sans OS dans le réseau de communication (401) et, une fois validé, charger le transfert de fichier de données de mise à jour de système OTA dans son au moins une mémoire (390) par une opération d'écrasement d'un fichier de données système existant.

8. Réseau de communication (401) selon la revendication 7, dans lequel le premier dispositif intégré sans OS est configuré pour effectuer une opération d'écriture du fichier de données système existant dans la pluralité de différents dispositifs intégrés sans OS dans le réseau de communication (401) qui fournit une sauvegarde du fichier de données système existant avant une opération d'écrasement du fichier de données système existant.

9. Réseau de communication (401) selon la revendication 7 ou la revendication 8, dans lequel au moins l'une des opérations parmi : le transfert de fichier de données de mise à jour de système OTA, une sauvegarde d'un fichier de données de système existant avant une opération d'écrasement du fichier de données système existant, est configurée pour être disponible pour la pluralité de différents dispositifs sans OS intégrés du réseau de communication (401).

10. Réseau de communication (401) selon l'une quelconque des revendications précédentes, dans lequel le processeur de signaux (408, 458) et l'émetteur (422, 472) d'au moins l'un des dispositifs suivants : le premier dispositif intégré sans OS (400), le deuxième dispositif intégré sans OS (450) est configuré pour déterminer que le dispositif intégré sans OS (450) où il réside nécessite des données et, en réponse à cela, pour envoyer un message de demande de données dans le réseau de communication (401) à d'autres dispositifs intégrés sans OS, où le message de demande de données est une demande pour l'un des éléments parmi : un fragment de données ou un fichier de données entier.

11. Réseau de communication (401) selon l'une quelconque des revendications précédentes, dans lequel le réseau de communication (401) est configuré comme un réseau de type Internet des objets, IoT.

12. Procédé de fonctionnement d'un système de mémoire distribuée, DMS, par un réseau de communication (401), le procédé comprenant les étapes suivantes :
fournir une pluralité de dispositifs intégrés sans OS opérationnels au sein du réseau de communication (401) avec au moins une mémoire (390) ;
configurer l'au moins une mémoire (390) de la pluralité de dispositifs intégrés sans OS afin qu'ils comprennent :
une première partie de la mémoire (310, 330, 350, 370) réservée au dispositif intégré sans OS où réside l'au moins une mémoire (390) ; et
une deuxième partie de mémoire (320, 340, 360, 380) réservée et disponible pour au moins un autre dispositif intégré sans OS de la pluralité de dispositifs intégrés sans OS dans le réseau de communication (401) à utiliser ;
où un premier dispositif intégré sans OS (400) de la pluralité de dispositifs intégrés sans OS comprend : un premier récepteur (406) configuré pour recevoir un fragment de données ;
un premier émetteur (422) ; et un processeur de signaux (408) couplé de manière opérationnelle au premier récepteur (406), au premier émetteur (422) et à l'au moins une mémoire (390) ;
le procédé comprenant en outre le processeur de signaux déterminant si l'au moins une mémoire (390) a une capacité de mémoire (320, 340, 360, 380) pour stocker le fragment de données reçu ;
et, en réponse à l'au moins une mémoire (390) n'ayant pas de capacité de mémoire (320, 340, 360, 380) pour stocker le fragment de données reçu, le premier processeur de signaux (408) et le premier émetteur (422) envoient un message de demande de stockage à au moins l'un de la pluralité de dispositifs intégrés sans OS (450) ; et
où le message de demande de stockage comprend au moins un élément parmi : une commande de demande d'écriture de données ; un message de demande de stockage de diffusion ; un message de demande de stockage de multidiffusion ; un message de demande de stockage qui est envoyé directement à un dispositif identifié parmi la pluralité de dispositifs intégrés sans OS indiqué par un algorithme de mappage de données employé par le processeur de signaux.

13. Procédé selon la revendication 12, dans lequel le deuxième dispositif intégré sans OS (450) comprend en outre un deuxième émetteur (472) couplé de manière opérationnelle au deuxième processeur de signaux (458) et à l'au moins une mémoire (390),
le procédé comprenant en outre les étapes suivantes exécutées par le deuxième processeur de signaux (458) :
transmettre une demande de fragment de données au premier dispositif intégré sans OS (400) en réponse au message de demande de stockage reçu et à la détermination que la mémoire (390) possède une capacité de mémoire disponible (320, 340, 360, 380) pour stocker le fragment de données reçu ; et
recevoir le fragment de données reçu en réponse à la demande de fragment de données transmise.

14. Procédé selon la revendication 13, dans lequel, en réponse au premier dispositif intégré sans OS (400) ayant reçu de multiples requêtes pour le fragment de données en provenance de la pluralité de dispositifs intégrés sans OS,
le procédé comprend en outre que le processeur (408) du premier dispositif intégré sans OS (400) sélectionne une demande parmi l'un de la pluralité de dispositifs intégrés sans OS indiquant au moins un élément parmi : une qualité de service, QoS, un critère basé sur la proximité d'un dispositif émetteur, une analyse basée sur la charge.

15. Procédé selon l'une quelconque des revendications 12 à 14, dans lequel le message de demande de stockage comprend un transfert de fichier de données de mise à jour de système par liaison radio, OTA, qui est envoyé à une pluralité de différents dispositifs intégrés sans OS du réseau de communication (401),
le procédé comprenant en outre de diviser le transfert de fichier de données en plusieurs fragments de données et de stocker de manière temporaire ou permanente les fragments de données respectifs des multiples fragments de données sur une pluralité différente de dispositifs intégrés sans OS à travers le réseau de communication (401).
